# EUROPEAN PATENT SPECIFICATION

(11) **EP 0 576 413 B1**
(45) Date of publication and mention of the grant of the patent: **13.01.1999**
(21) Application number: 93870100.0
(22) Date of filing: 07.06.1993
(51) Int. Cl.: C08F 10/00, C08F 4/646

(54) **Electron donors for improved olefin polymerization**
Elektrondonor zur verbesserten Olefinpolymerisation
Donneurs d'électrons pour la polymérisation améliorée d'oléfines

(30) Priority: 08.06.1992 US 895287
(43) Date of publication of application: 29.12.1993
(73) Proprietor: FINA TECHNOLOGY, INC., Dallas, Texas 75206 (US)
(72) Inventor: Shamshoum, Edwar, Houston, Texas 77062 (US); Rauscher, David, Webster, Texas 77598 (US)
(74) Representative: Leyder, Francis

(56) References cited:
- EP-A- 0 282 341
- EP-A- 0 426 140
- EP-A- 0 445 302
- EP-A- 0 461 775

## Description

### BACKGROUND

**TECHNICAL FIELD:** The present invention provides a catalyst system for the polymerization of olefins that include the combination of a specific titanium catalyst with an external electron donor compound of the formula: 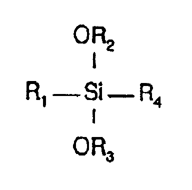 wherein R₁ is an alkyl group containing a primary carbon atom attached to the silicon atom of up to 3 carbon atoms; R₂ and R₃ are alkyl or aryl groups; and R₄ is an alkyl with a primary carbon atom attached to the silicon atom of up to 3 carbon atoms, R₁ and R₄ are the same.

**DESCRIPTION OF PRIOR ART:** Catalyst systems for the polymerization of olefins are well known in the art. Typically, these systems include a Ziegler-Natta type polymerization catalyst; a co-catalyst, usually an organoaluminum compound; and an electron donor compound. Examples of such catalyst systems are shown in the following U.S. Patents: 4,107,413; 4,294,721; 4,439,540; 4,115,319; 4,220,554; 4,460,701; and 4,562,173. These are just a few of the scores of issued patents relating to catalysts and catalyst systems designed primarily for the polymerization of propylene and ethylene.

A Ziegler-Natta type polymerization catalyst is basically a complex derived from a halide of a transition metal, for example, titanium, chromium or vanadium with a metal hydride and/or a metal alkyl that is typically an organoaluminum compound. The catalyst is usually comprised of a titanium halide supported on a magnesium compound complexed with an alkylaluminum.

The development of these polymerization catalysts has proceeded seemingly in generations of catalysts. The catalyst disclosed in the patents referenced above are considered by most to be third generation catalysts. With each new generation of catalysts, the catalyst properties have improved. Particularly, the efficiencies of the catalysts, as expressed in kilograms of polymer product per gram of catalyst in two hours, have increased from the 1-3 range to the 10-12 range and beyond. Catalysts have been developed that not only have higher efficiencies but also retain their activity over a longer period of time, thus being able to produce more polymer product over the life of the catalyst. Any increase in the efficiency and life of the catalyst leads to lower costs due to lower catalyst consumption, and it also lowers the capital expenditures in building and operating a plant as the size of the reactors are lowered for specific plant capacities and the reactor residence time is lowered. A higher efficiency also leads to a cleaner polymer product thereby avoiding the need to wash or treat the product to remove catalyst ash residuals.

In addition to the improved catalysts, improved activation methods have also lead to increases in the catalyst efficiency. A most recent discovery includes a process for pre-polymerizing the catalyst just prior to introducing the catalyst into the reaction zone. This process is disclosed in U.S. Patent No. 4,767,735.

In addition to the development of new catalysts and new reaction processes, a discovery of a more appropriate co-catalyst or electron donor to go with the new generation of catalysts in forming a total catalyst system would be of great benefit to the polymerization art especially if it lead to dramatic increases in the efficiency of the catalyst system and to improved quality control of the polymer product. In such a total catalyst system, a co-catalyst activates the catalyst and provides the initiation of a polymer chain. The co-catalyst the works well with the new generation catalysts is an organoaluminum compound, most typically triethylaluminum (TEAl) or another trialkylaluminum. Examples of other useful organoaluminum compounds include an alkylaluminum dihalide, a trialkoxyaluminum, a dialkylalumlnum halide, and a triisobutylaluminum.

An electron donor compound is used in the polymerization reaction to reduce the atactic form of the polymer thereby giving control of and increasing the production of isotactic polymers. Although a broad range of compounds are known generally as electron donors, a particular catalyst may have a specific compound or group of compounds with which it is especially compatible. Work disclosed in Makromol, Chem., Härkönen et al, vol. 192, p. 2857 (1991) and in "Catalytic Olefin Polymerization"(Keii, T., Soga, K., Eds., Elsevier:New York, 1990) Härkönen at al, p. 87, has shown that some effects of the donor can be influenced by its structure and suggests that a high performance alkoxysilane donor will contain at least two small alkoxy groups, preferably methoxy and one or two branched alkyl groups. Other work suggested that a good donor preferably has a dimethoxy structure with a bulky alkyl or cycloalkyl group containing at least one secondary or tertiary carbon, but that the second alkyl group should contain a primary carbon. One such group of electron donors are disclosed in U.S. Patent No. 4,927,797.

The present invention comprises another such discovery of an appropriate type of electron donor which gives significant increases in catalyst efficiency as well as improved control of the isotactic index of the desired polymer product and other properties of the product would be highly advantageous. It has been surprisingly discovered that a specific group of silane compounds serving as electron donors in combination with a particular type of catalyst results in significant increases in catalyst efficiency over the previously known efficiencies for this particular type of catalyst as well as other known catalyst systems.

EP-A-0 426 140 discloses a catalyst comprising:
a) a conventional solid Ziegler-Natta catalyst
b) an aluminum trialkyl co-catalyst like triethyl aluminum and
c) an organosilicone compound like diisobutyldimethoxysilane as an external electron donor. The catalyst provides a copolymer of propylene and hexene-1 which has a low amount of hexane extractables.

EP-A-0 445 302 discloses a process for the polymerization of olefins comprising a conventional Ziegler-Natta catalyst component, an organoaluminum compound like triethylaluminum and an silicone compound as electron donor such as diisobutyldiethoxysilane and other silanes The boiling n-heptane extraction residue is 97.0 to 97.6 %.

EP-A-0 282 341 discloses a catalyst comprising:
a) a conventional solid Ziegler-Natta catalyst
b) an aluminum trialkyl co-catalyst like triethyl aluminum and di-n-propyldimethoxysilane, di-n-butyldimethoxysilane, di-n-hexylmethyldimethoxysilane and cumylmethyldimethoxysilane as electron donor. The catalyst provides polymers having a high isotactic index.

EP-A-0 461 775 discloses a catalyst comprising:
a) a solid Ziegler-Natta catalyst
b) triethyl aluminum and
c) diisobutyldimethoxysilane as an selectivity control agent. The catalyst provides a copolymer of propylene which has a low amount of xylene solubles.

### SUMMARY OF THE INVENTION

The present invention provides a system for the polymerization of olefins as defined in claims 1 and 7 wherein the system includes the combination of a particular type of catalyst with a specific group of electron donor compounds which results in significant increases in the efficiency of the catalyst and improved control of the properties of the polymer product. The catalyst is a new generation catalyst comprising a complex of a dialkoxy magnesium and a titanium halide. The electron donor is selected from a silane compound of the following formula: 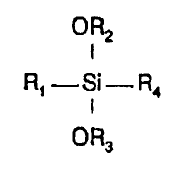 wherein R₁ is an alkyl group containing a primary carbon atom attached to the silicon of up to 3 carbon atoms; R₂ and R₃ are alkyl or aryl groups; and R₄ is an alkyl group with a primary carbon atoms attached to the silicon atom of up to 3 carbon atoms, R₁ and R₄ being the same. In a preferred embodiment, R₁ is a primary alkyl group of up to 3 carbon atoms; R₂ and R₃ are methyl, ethyl, propyl, or butyl groups and not necessarily the same; and R₄ is a primary alkyl group of up to 3 carbon atoms; R₁ and R₄ are preferably selected from the groups consisting of n-propyl, and methyl, most preferably, n-propyl with R₁ and R₄ being the same a preferred electron donor is di-n-propyldimethoxysilane (DPDS). In addition, the system may contain an organoaluminum compound which acts as a co-catalyst. A preferred co-catalyst is a trialkylaluminum, most preferably triethylaluminum (TEAl).

The invention also provides a catalyst system as described above, wherein the system is capable of polymerizing an olefin monomer with a catalyst efficiency of about 30 kilograms of polymer product per gram of catalyst in one hour. Particular catalyst systems included in the invention may show somewhat lower efficiencies. Further, the catalyst system may be characterized by an efficiency of over 30 kg/g-cat·h while the Si/Ti ratio defined by the mole ratio of the silane electron donor and the titanium component of the catalyst varies within the range 4-200. Additionally, the catalyst system may be further characterized by an efficiency greater than 30 while producing a polymer product with xylene solubles of less than 3.00 wt%.

The catalyst system may be further characterized by having an isotactic capacity such that the system produces a polymer product in which the xylene soluble atactic form may be kept at less than 3.00 wt% of the product while the Si/Ti mole ratio varies up to 200. The system may be further characterized by higher molecular weight of the product.

The invention also provides a process for the polymerization of olefins according to claim 14. The process comprises: contacting the new generation polymerization catalyst with an organoaluminum compound, preferably with a trialkylaluminum; contacting the catalyst with an electron donor either simultaneously with or after contact with the organoaluminum, the electron donor being a silane compound as described by the formula above, pre-polymerizing the catalyst by contacting a small amount of monomer with the catalyst; and introducing the catalyst into a polymerization reaction zone containing the organoaluminum compound, the electron donor and the monomer. The process further comprises withdrawing a polymer product in which the xylene solubles are at less than 3.00 wt%, while the Si/Ti ratio in the reaction zone is within the range 4-200.

### DETAILED DESCRIPTION OF THE INVENTION

The present invention relates to the combination of a particular group of compounds as electron donors with a particular type of catalyst for use in the polymerization of propylene. This combination results in a catalyst system that has a catalyst efficiency significantly higher than provided by previous catalyst systems as illustrated by the comparative examples included below. Further, the catalyst system of the present invention retains most of its high activity over time relative to other catalyst systems. The catalyst system also provides better control of the xylene solubles of the polymer product than with other electron donors and the particular type of catalyst. These and other beneficial advantages will become more apparent from the following detailed description of the invention and the accompanying examples.

Electron donors are typically used in two ways in the formation of a Ziegler-Natta catalyst and a catalyst system. First, an internal electron donor may be used in the formation reaction of the catalyst as the transition metal halide is reacted with the metal hydride or metal alkyl. Examples of internal electron donors include: amines, amides, ethers, esters, aromatic esters, ketones, nitriles, phosphines, stibines, arsines, phosphoramides, thioethers, thioesters, aldehydes, alcoholates, and salts of organic acids. The second use for an electron donor in a catalyst system is as an external electron donor and stereoregulator in the polymerization reaction. The same compound may be used in both instances, although typically they are different. A common external electron donor is an organic silicon compound, for example, cyclohexylmethyldimethoxysilane (CMDS). A description of the two types of electron donors is provided in U.S. Patent 4,535,068, the disclosure of which is hereby incorporated by reference.

As the present invention relates particularly to external electron donors, the term "electron donor" as used herein, refers to the external donor. The external electron donor acts as a stereoregulator to control the amount of atactic form of polymer produced. It may also increase the production of isotactlc polymers. Organic silicon compounds are known in the art for use as electron donors. Examples of electron donors that are organic silicon compounds are disclosed in U.S. Patent Nos. 4,218,339; 4,395,360; 4,328,122; 4,473,660 and 4,927,797. As mentioned, a particular catalyst may produce better results when paired with a particular group of electron donors. Examples of this pairing of catalyst and electron donors are disclosed in U.S. Patent Nos. 4,562,173; 4,547,552; and 4,927,797.

It has been discovered that a particular group of electron donors does significantly enhance the catalytic properties of a specific Ziegler-Natta Catalyst.

The present invention uses one particular Ziegler-Natta catalyst which is a new generation, Ziegler-type titanium catalyst of the polymerization of olefins comprising a solid catalyst component obtained by (i) suspending a dialkoxy magnesium in an aromatic hydrocarbon that is liquid at normal temperatures, (ii) contacting the dialkoxy magnesium with a titanium halide and further contacting the resulting composition a second time with the titanium halide, and (iii) contacting the dialkoxy magnesium with a diester of an aromatic dicarboxylic acid at some point during the treatment with the titanium halide in (ii), as disclosed in U.S. Patent Nos. 4,927,797; 4,816,433 and 4,839,321.

Preferred aromatic hydrocarbons useful in the formation of the catalyst include benzene, xylene, ethylbenzene, propylbenzene and trimethylbenzene. A diester of phthalic acids is preferably used as the diester of the aromatic dicarboxylic acid. Examples include dimethyl phthalate, diethyl phthalate, dipropyl phthalate, diisopropyl phthalate, dibutyl phthalate, diisobutyl phthalate, diamyl phthalate, diisoamyl phthalate, methylbutyl phthalate, ethylbutyl phthalate, ethylisobutyl phthalate and ethylpropyl phthalate. Suitable titanium halides include TiCl₄, TiBr₄ and TiI₄, with TiCl₄ being preferred.

The ratios of the respective components are not critical but can vary to tailor the performance of the catalyst. However, in generally, the diester of the aromatic dicarboxylic acid is used in an amount of 0.01 to 2 g, preferably 0.1 to 1 g, per gram of the dialkoxy magnesium, and the titanium halide is used in an amount of at least 0.1 g, preferably at least 1 gram, per gram of the alkoxy magnesium. The amount of the aromatic hydrocarbon which is liquid at normal temperature should be sufficient to form a suspension.

Suspension of the dialkoxy magnesium into the aromatic hydrocarbon is performed at a temperature of from room temperature to the boiling point of the aromatic hydrocarbon used for up to 100 hours, preferably up to 10 hours. It is important that the formed suspension should not be a homogeneous solution. The contact of the suspension with the titanium halide and the contact of the composition obtained by said contact with the titanium halide are carried out at a temperature of from - 20°C to the boiling point of the titanium halide used, preferably 50 to 120°C, for 10 minutes to 10 hours. The means for contacting the components is not particularly critical, so far as sufficient contact is attained among the respective components. Preferably, the contact is carried out by using a vessel provided with a stirrer.

The above-described catalyst exhibits some increase in efficiency over previously known catalysts when it is paired with a previously used electron donor, but that increase is significantly greater when the catalyst is paired with electron donors as described by the present invention. This improved efficiency is accompanied by better operational control of the properties of the polymer product such as the xylene solubles.

The electron donors included in the present invention are organic silicon compounds such as those described by the following formula: 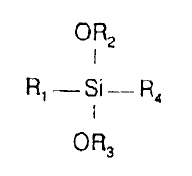 wherein R₁ is an alkyl group containing a primary carbon atom attached to the silicon atom of up to 3 carbon atoms; R₂ and R₃ are alkyl or aryl groups; and R₄ is an alkyl group with a primary carbon atom attached to the silicon atom of up to 3 carbon atoms; R₁ and R₄ are the same.

In preferred embodiments of the invention, R₁ is a primary alkyl group of up to 3 carbon atoms, R₂ and R₃ are methyl, ethyl or propyl groups, and R₄ is a primary alkyl group of up to 3 carbon atoms. R₁ and R₄ are preferably chosen from the group consisting of n-propyl, and methyl; most preferably, are n-propyl with R₁ and R₄ being the same. Most preferred electron donors are di-n-propyldimethoxysilane (DPDS). The combination of this class of electron donors and the specific Ziegler-Natta catalyst yields wholly unexpected results that surpass previously known catalyst systems. The electron donors as described by the present invention may be limited by the stability of the compound and the ease of handling including storage, transportation and use in the plant.

The most significant unexpected result obtained from the combination of the above-described catalyst and DPDS is the dramatic increase in the efficiency of the catalyst system as measured in kilograms of polymer product per gram of catalyst in one hour (kg/g-cat·h). The catalyst system, which includes an organo-aluminum compound, has been shown to achieve efficiencies higher than 30 kg/g-cat·h, and the efficiency can be over 30 kg/g-cat·h for Si/Ti mole ratios within the range 4-200. The optimum Si/Ti ratio in order to achieve the highest efficiency is within the range 10-20.

An advantage is that a highly active and stable system produces a cleaner polymer as there is more polymer produced for the same amount of catalyst ash and therefore resulting in a lower percentage of ash content in the polymer. The co-polymer product would be less corrosive, exhibit less color and be more applicable for use in electrical systems.

The present invention also provides a process for the polymerization of olefins using the catalyst and the electron donors described by the above formula comprising:
a) selecting a specified Ziegler-Natta catalyst component;
b) contacting the catalyst with an organoaluminum compound;
c) contacting the catalyst with an external electron donor as described above;
d) introducing the catalyst into a polymerization reaction zone containing the organoaluminum compound, the electron donor and the monomer; and
e) extracting polymer product from the reactor.
Although the catalyst system may be used in almost any commercially known polymerization process, the preferred process of the present invention includes a pre-polymerization of the catalyst by contacting a small amount of monomer with the catalyst after the catalyst has been contacted with the electron donor. A pre-polymerization process is described in U.S. Patent Nos. 4,767,735, and 4,927,797, incorporated by reference above. As provided in those disclosures, a carrier stream for the catalyst is provided, the catalyst is contacted with the co-catalyst or organoaluminum compound, the catalyst is contacted with the electron donor, the catalyst stream is contacted with a relatively small amount of the total amount of monomer to be polymerized, the catalyst stream passes through a tubular reactor, and the pre-polymerized catalyst and catalyst stream are introduced into the polymerizatlon reaction zone. The electron donor may be contacted with the catalyst simultaneously with the co-catalyst. A polymer product may then be withdrawn from the reactor. In using the described catalyst with the electron donors described by the formula above, the catalyst may have an efficiency of above 30 kg/g-cat·h while the Si/Ti mole ratio in the reaction is within the range 4-10. The polymer product may also be characterized by xylene solubles at less than 3.00 wt%.

The following Examples and Comparative Examples illustrate the present invention and its various advantages in more detail. The results are summarized in Tables 1-2. The catalyst used was prepared with the materials and processes as disclosed in U.S. Patent Nos. 4,927,797; 4,816,433 and 4,839,321.

### Example 1

Prior to a polymerization run, all traces of moisture and air are expelled from the reactor by heating to a temperature over 100°C for a minimum of 30 minutes under a constant purge of dry nitrogen. Following this heating, the reactor is cooled to room temperature (25°C) under nitrogen. The reactor is stabilized at room temperature and then 16 mmoles of hydrogen and 1.0 L of propylene are added. The reactor is stirred at 1000 rpm and the temperature is raised to 70°C. 1.0 mmole of TEAl and 0.02 mmole of DPDS are added to a 40 cc tubular reaction vessel. Ten milligrams of catalyst in a mineral oil suspension are added to the 40 cc reaction cylinder, The TEAl and DPDS are allowed to pre-contact approximately five minutes, and the catalyst is allowed to pre-contact the TEAl and DPDS mixture for approximately two minutes. The tubular reaction vessel is then attached to an entry point on the reactor and filled with room temperature liquid propylene which is allowed to polymerize for about five seconds to effect prepolymerization of the catalyst. The contents of the vessel are then flushed into the reactor with 0.2 L of room temperature propylene. The total amount of liquid propylene present in the reactor is about 1.2 L. The polymerization reaction is allowed to proceed for one hour, at which point it is terminated by venting the excess propylene and cooling the reactor to room temperature. The reactor is then opened to collect the polymer product which is dried and analyzed. The efficiency of the catalyst was determined from the mass yield of polymer for the known amount of catalyst used. The efficiency is reported in kilograms of polymer product per gram of catalyst per hour. The Si/Ti mole ratio was calculated from the molar amount of DPDS used divided by the molar amount of catalyst. The xylene solubles were measured by dissolving the polymer in hot xylene, cooling the solution to 0°C and precipitating out the isotactic form. The xylene solubles are the wt% of the polymer that was soluble in the cold xylene. In addition, the bulk density of the polymer product was measured and calculated using standard techniques. The results are shown in Table 1.

### Examples 2-7

The procedures of Example 1 were repeated except that the total amount of DPDS was varied as indicated in Table 1 from 0.02 mmoles to 1.00 mmoles. This varied the Si/Ti ratio from 200 to 4 and illustrates the effect of the Si/Ti ratio on the efficiency and on the xylene solubles. The results are tabulated in Table 1.

As shown in Table 1, the efficiency is greater than 30 kg/g-cat·1h for Si/Ti ratios within the range from about 4 to about 40 and it decreases as the Si/Ti ratio increases from about 40 to about 200, reaching a maximum at some point between about 4 to about 10 Si/Ti. The DPDS system is capable of easily achieving efficiencies greater than 30 kg/g-cat·1h. Also, as seen from the results shown in Table 1, the xylene solubles are controlled within a narrow range as the Si/Ti ratio varies from 4-200. The relationship is nearly linear with a small, gradual slope. As discussed, these relationships of the properties of the polymer and the Si/Ti ratio are very advantageous in allowing some fluctuations in the operation of the reactor and/or some errors without significantly changing the properties of the product. It also allows particular specifications for a product to be achieved more easily with a broader range of reactor parameters. The results are shown in Table 1.

### Comparative Examples 1-5

The procedure of Example 1 were repeated except that CMDS was substituted for DPDS as the electron donor. The results are shown in Table 2.

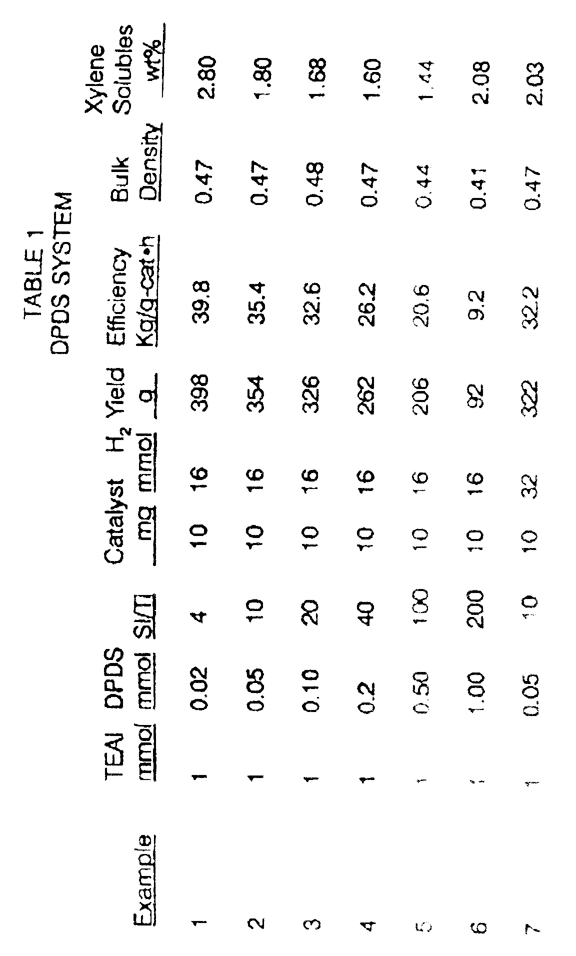

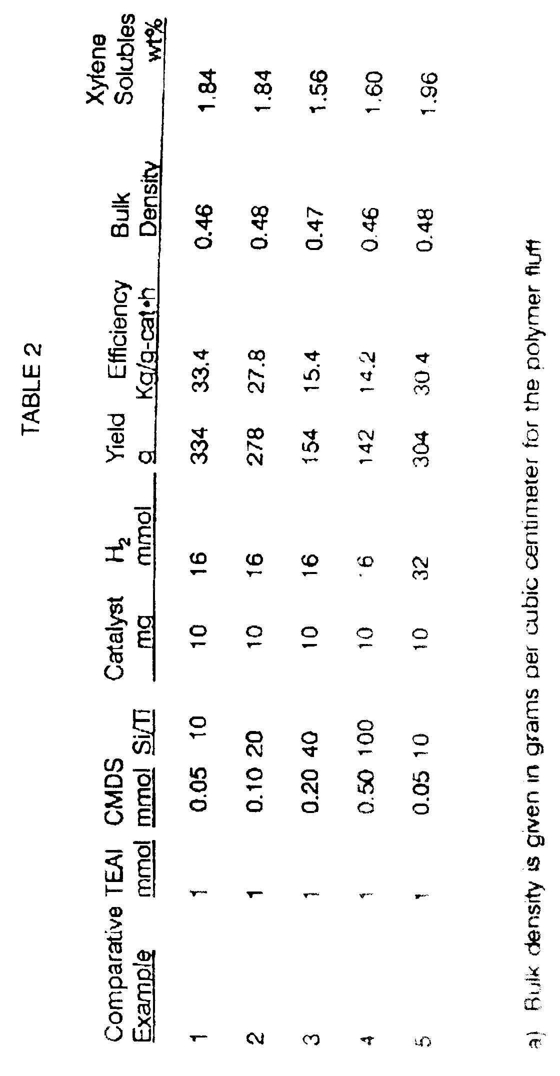

As shown in Table 1, the efficiency is at least 30 kg/g-cat.1h for Si/Ti ratios within the range from about 4 to about 20, reaching a maximum at some point between about 4 to about 10 Si/Ti. This electron donor system is capable of easily achieving efficiencies of at least 30 kg/g-cat·1h. Also, as seen from the results shown in Tables 1, 3 and 4 the xylene solubles are less than 3.00 wt% as the Si/Ti ratio varies from 4-200.

## Claims

1. A catalyst system for the polymerization and copolymerization of olefins comprising:
(a) a Ziegler-Natta catalyst component comprising a solid catalyst component prepared by: (i) suspending a dialkoxy magnesium in an aromatic hydrocarbon that is liquid at normal temperatures, (ii) contacting the dialkoxy magnesium with a titanium halide and further contacting the resulting composition a second time with the titanium halide, and (iii) contacting the dialkoxy magnesium with a diester of an aromatic dicarboxylic acid at some point during the treatment with the titanium halide in (ii); and
(b) an external electron donor described by the formula : 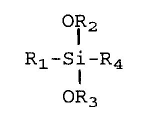 wherein R₁ is an alkyl group containing a primary carbon atom attached to the silicon atom of up to 3 carbon atoms; R₂ and R₃ are each independently an alkyl or aryl group; and R₄ is an alkyl group with a primary carbon atom attached to the silicon atom of up to 3 carbon atoms, R₁ and R₄ are the same.

2. The catalyst system of claim 1 wherein R₂ and R₃ are selected from the group consisting of methyl, ethyl, propyl and butyl groups.

3. The catalyst system of Claim 1 further comprising : (c) an organoaluminum compound.

4. The catalyst system of Claim 3 wherein the organoaluminum compound is selected from the group consisting of an alkylaluminum, an alkylaluminum dihalide, a trialkoxyaluminum, a dialkylaluminum halide and a triisobutylaluminum.

5. The catalyst system of Claim 4 wherein the organoaluminum compound is triethylaluminum.

6. The catalyst system of Claim 1 wherein the electron donor is di-n-propyldimethoxysilane.

7. A catalyst system for the polymerization and copolymerization of olefins, said system comprising :
(a) a Ziegler-Natta catalyst component and comprising a solid catalyst component prepared by: (i) suspending a dialkoxy magnesium in an aromatic hydrocarbon that is liquid at normal temperatures, (ii) contacting the dialkoxy magnesium with a titanium halide and further contacting the resulting composition a second time with the titanium halide, and (iii) contacting the dialkoxy magnesium with a diester of an aromatic dicarboxylic acid at some point during the treatment with the titanium halide in (ii); and
(b) an external electron donor described by the formula : 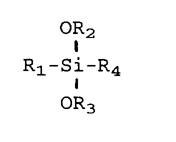 wherein R₁ is an alkyl group containing a primary carbon atom attached to the silicon atom of up to 3 carbon atoms; R₂ and R₃ are each independently an alkyl or aryl group; and R₄ is an alkyl group with a primary carbon atom attached to the silicon atom of up to 3 carbon atoms; R₁ and R₄ are the same;
(c) an organoaluminum compound;
said system being characterized by a catalyst efficiency of over 30 kilograms of polymer product per gram of catalyst in one hour as the mole ratio Si/Ti as derived from the Si in compound (b) to the Ti from compound (a) is within the range of 4-200.

8. The system of Claim 7 wherein the system is further characterized by a polymer product in which the xylene solubles measured by dissolving the polymer in hot xylene, cooling the solution to 0°C and precipitating out the isotactic form, the xylene solubles being the wt% of the polymer that was soluble in the cold xylene, are controlled at less than 3.00 wt% of the polymer product while the Si/Ti mole ratio is within the range of 4-200.

9. The system of Claim 7 wherein R₂ and R₃ are selected from the group consisting of methyl, ethyl, propyl and butyl groups.

10. The system of Claim 7 wherein the catalyst is prepolymerized.

11. The system of Claim 7 wherein the organoaluminum compound is selected from the group consisting of an alkylaluminum, an alkylaluminum dihalide, a trialkoxyaluminum, a dialkylaluminum halide and a triisobutylaluminum.

12. The system of Claim 7 wherein the electron donor is di-n-propyldimethoxylsilane.

13. The system of Claim 10 wherein the organoaluminum compound is triethylaluminum.

14. A process for the polymerization of olefins, comprising :
(a) selecting a Ziegler-Natta catalyst component comprising a solid catalyst component obtained by (i) suspending a dialkoxy magnesium in an aromatic hydrocarbon that is liquid at normal temperatures, (ii) contacting the dialkoxy magnesium with a titanium halide and further (iii) contacting the resulting composition a second time with the titanium halide, and contacting the dialkoxy magnesium with a diester of an aromatic dicarboxylic acid at some point during the treatment with the titanium halide in (ii);
(b) contacting the catalyst component with an organoaluminum compound to activate the catalyst;
(c) contacting said catalyst with an external electron donor either simultaneously with or after step (b), said electron donor being described by the formula : 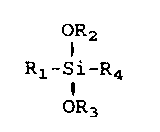 wherein R₁ is an alkyl group containing a primary carbon atom attached to the silicon atom of up to 3 carbon atoms; R₂ and R₃ are each independently an alkyl or aryl group; and R₄ is an alkyl group with a primary carbon atom attached to the silicon atom of up to 3 carbon atoms; R₁ and R₄ are the same;
(d) pre-polymerizing said catalyst by contacting a small amount of monomer with said catalyst; and
(e) introducing said catalyst into a polymerization reaction zone containing said organoaluminum compound, said electron donor and said monomer.

15. The process of Claim 14 wherein said organoaluminum compound is triethylaluminum.

## Patentansprüche

1. Ein Katalysatorsystem für die Polymerisation und Copolymerisation von Olefinen, umfassend
(a) eine Ziegler-Natta Katalysatorkomponente, welche eine feste Katalysatorkomponente umfaßt, hergestellt durch: (i) Suspendieren eines Dialkoxymagnesiums in einem aromatischen Kohlenwasserstoff, der bei normalen Temperaturen flüssig ist, (ii) in Berührung bringen des Dialkoxymagnesiums mit einem Titanhalogenid und ferner in Berührung bringen der sich ergebenden Zusammensetzung ein zweites Mal mit dem Titanhalogenid, und (iii) in Berührung bringen des Dialkoxymagnesiums mit einem Diester einer aromatischen Dicarbonsäure an einem Punkt während der Behandlung mit dem Titanhalogenid in (ii), und
(b) einen externen Elektronendonator,beschrieben durch die Formel: 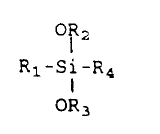 wobei R₁ eine Alkylgruppe ist, enthaltend ein primäres Kohlenstoffatom, angefügt an das Siliciumatom, von bis zu 3 Kohlenstoffatomen, R₂ und R₃ jeweils unabhängig eine Alkyl- oder Arylgruppe sind, und R₄ eine Alkylgruppe mit einem primären Kohlenstoffatom, angefügt an das Siliciumatom, von bis zu 3 Kohlenstoffatomen ist, R₁ und R₄ gleich sind.

2. Katalysatorsystem nach Anspruch 1, wobei R₂ und R₃ aus der Gruppe aus Methyl-, Ethyl-, Propyl- und Butylgruppen ausgewählt sind.

3. Katalysatorsystem nach Anspruch 1, welches ferner (c) eine Organoaluminiumverbindung umfaßt.

4. Katalysatorsystem nach Anspruch 3, wobei die Organoaluminumverbindung ausgewählt ist aus der Gruppe aus einem Alkylaluminium, einem Alkylaluminiumdihalogenid, einem Trialkoxyaluminium, einem Dialkylaluminiumhalogenid und einem Triisobutylaluminium.

5. Katalysatorsystem nach Anspruch 4, wobei die Organoaluminiumverbindung Triethylaluminium ist.

6. Katalysatorsystem nach Anspruch 1, wobei der Elektronendonator Di-n-Propyldimethoxysilan ist.

7. Katalysatorsystem für die Polymerisation und Copolymerisation von Olefinen, wobei das System umfaßt:
(a) eine Ziegler-Natta Katalysatorkomponente und umfaßt eine feste Katalysatorkomponente, hergestellt durch (i) Suspendieren eines Dialkoxymagnesiums in einem aromatischen Kohlenwasserstoff, der bei normalen Temperaturen flüssig ist, (ii) in Berührung bringen des Dialkoxymagnesiums mit einem Titanhalogenid und ferner in Berührung bringen der sich ergebenden Zusammensetzung ein zweites Mal mit dem Titanhalogenid, und (iii) in Berührung bringen des Dialkoxymagnesiums mit einem Diester einer aromatischen Dicarbonsäure an einem Punkt während der Behandlung mit dem Titanhalogenid in (ii), und
(b) einen externen Elektronendonator, beschrieben durch die Formel 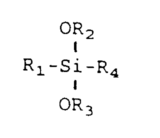 wobei R₁ eine Alkylgruppe, enthaltend ein primäres Kohlenstoffatom, angefügt an das Siliciumatom, von bis zu 3 Kohlenstoffatomen ist, R₂ und R₃ jeweils unabhängig eine Alkyl- oder Arylgruppe sind, und R₄ eine Alkylgruppe mit einem primären Kohlenstoffatom, angefügt an das Siliciumatom, von bis zu 3 Kohlenstoffatomen ist, R₁ und R₄ gleich sind,
(c) eine Organoaluminiumverbindung,
wobei das System gekennzeichnet ist durch eine Katalysatorwirksamkeit von über 30 Kilogramm Polymerprodukt pro Gramm Katalysator in einer Stunde, da das Molverhältnis Si/Ti, wie abgeleitet von dem Si in Verbindung (b) zu dem Ti von Verbindung (a) im Bereich von 4-200 liegt.

8. System nach Anspruch 7, wobei das System ferner durch ein Polymerprodukt gekennzeichnet ist, bei dem die in Xylol löslichen Stoffe, gemessen durch Lösen des Polymeren in heißem Xylol, Kühlen der Lösung auf 0°C und Herausfällen der isotaktischen Form, wobei die in Xylol löslichen Stoffe das Gew.% des Polymeren sind, das in dem kalten Xylol löslich war, kontrolliert werden zu weniger als 3,00 Gew.% des Polymerproduktes, während das Si/Ti Molverhältnis im Bereich von 4-200 liegt.

9. System nach Anspruch 7, wobei R₂ und R₃ aus der Gruppe aus Methyl-, Ethyl-, Propyl- und Butylgruppen ausgewählt sind.

10. System nach Anspruch 7, wobei der Katalysator vorpolymerisiert ist.

11. System nach Anspruch 7, wobei die Organoaluminiumverbindung aus der Gruppe aus einem Alkylaluminium, einem Alkylaluminiumdihalogenid, einem Trialkoxyaluminium, einem Dialkylaluminiumhalogenid und einem Triisobutylaluminium ausgewählt ist.

12. System nach Anspruch 7, wobei der Elektronendonator Di-n-Propyldimethoxysilan ist.

13. System nach Anspruch 10, wobei die Organoaluminiumverbindung Triethylaluminium ist.

14. Verfahren für die Polymerisation von Olefinen, umfassend:
(a) Auswählen einer Ziegler-Natta Katalysatorkomponente, umfassend eine feste Katalysatorkomponente, erhalten durch (i) Suspendieren eines Dialkoxymagnesiums in einem aromatischen Kohlenwasserstoff, der bei normalen Temperaturen flüssig ist, (ii) in Berührung bringen des Dialkoxymagnesiums mit einem Titanhalogenid und ferner (iii) in Berührung bringen der sich ergebenden Zusammensetzung ein zweites Mal mit dem Titanhalogenid, und in Berührung bringen des Dialkoxymagnesiums mit einem Diester einer aromatischen Dicarbonsäure an einem Punkt während der Behandlung mit dem Titanhalogenid in (ii),
(b) in Berührung bringen der Katalysatorkomponente mit einer Organoaluminiumverbindung unter Aktivieren des Katalysators,
(c) in Berührung bringen des Katalysators mit einem externen Elektronendonator entweder gleichzeitig mit oder nach Stufe (b), wobei der Elektronendonator durch die Formel beschrieben wird: 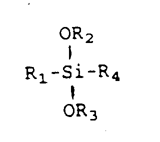 wobei R₁ eine Alkylgruppe, enthaltend ein primäres Kohlenstoffatom, angefügt an das Siliciumatom, von bis zu 3 Kohlenstoffatomen, ist, R₂ und R₃ jeweils unabhängig eine Alkyl- oder Arylgruppe sind, und R₄ eine Alkylgruppe mit einem primären Kohlenstoffatom, angefügt an das Siliciumatom, von bis zu 3 Kohlenstoffatomen ist, R₁ und R₄ gleich sind,
(d) Vorpolymerisieren des Katalysators durch in Berührung bringen einer geringen Menge von Monomerem mit dem Katalysator und
(e) Einführen des Katalysators in eine Polymerisationsreaktionszone, die die Organoaluminiumverbindung, den Elektronendonator und das Monomer enthält.

15. Verfahren nach Anspruch 14, wobei die Organoaluminiumverbindung Triethylaluminium ist.

## Revendications

1. Système de catalyseur pour la polymérisation et la copolymérisation d'oléfines, comprenant:
(a) un composant de catalyseur de Ziegler-Natta comprenant un composant de catalyseur solide préparé par: (i) mise en suspension d'un dialcoxymagnésium dans un hydrocarbure aromatique qui est liquide à la température normale, (ii) mise en contact du dialcoxymagnésium avec un halogénure de titane et mise en contact ultérieure de la composition résultante une seconde fois avec l'halogénure de titane, et (iii) mise en contact du dialcoxymagnésium avec un diester d'un acide dicarboxylique aromatique à un certain moment au cours du traitement avec l'halogénure de titane dans (ii); et
(b) un donneur d'électrons externe répondant à la formule: 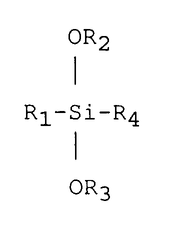 dans laquelle R₁ représente un groupe alkyle dans lequel un atome de carbone primaire est fixé à l'atome de silicium, contenant jusqu'à 3 atomes de carbone; R₂ et R₃ représentent chacun, indépendamment l'un de l'autre, un groupe alkyle ou un groupe aryle; et R₄ représente un groupe alkyle dans lequel un atome de carbone primaire est fixé à l'atome de silicium, contenant jusqu'à 3 atomes de carbone, R₁ et R₄ étant identiques.

2. Système de catalyseur selon la revendication 1, dans lequel R₂ et R₃ sont choisis parmi le groupe constitué par un groupe méthyle, un groupe éthyle, un groupe propyle et un groupe butyle.

3. Système de catalyseur selon la revendication 1, comprenant en outre: (c) un composé d'organoaluminium.

4. Système de catalyseur selon la revendication 3, dans lequel le composé d'organoaluminium est choisi parmi le groupe constitué par un alkylaluminium, un dihalogénure d'alkylaluminium, un trialcoxyaluminium, un halogénure de dialkylaluminium et un triisobutylaluminium.

5. Système de catalyseur selon la revendication 4, dans lequel le composé d'organoaluminium est le triéthylaluminium.

6. Système de catalyseur selon la revendication 1, dans lequel le donneur d'électrons est le di-n-propyldiméthoxysilane.

7. Système de catalyseur pour la polymérisation et la copolymérisation d'oléfines, ledit système comprenant:
(a) un composant de catalyseur de Ziegler-Natta comprenant un composant de catalyseur solide préparé par: (i) mise en suspension d'un dialcoxymagnésium dans un hydrocarbure aromatique qui est liquide à la température normale, (ii) mise en contact du dialcoxymagnésium avec un halogénure de titane et mise en contact ultérieure de la composition résultante une seconde fois avec l'halogénure de titane, et (iii) mise en contact du dialcoxymagnésium avec un diester d'un acide dicarboxylique aromatique à un certain moment au cours du traitement avec l'halogénure de titane dans (ii); et
(b) un donneur d'électrons externe répondant à la formule: 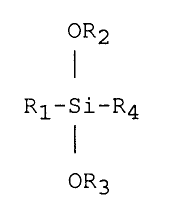 dans laquelle R₁ représente un groupe alkyle dans lequel un atome de carbone primaire est fixé à l'atome de silicium, contenant jusqu'à 3 atomes de carbone; R₂ et R₃ représentent chacun, indépendamment l'un de l'autre, un groupe alkyle ou un groupe aryle; et R₄ représente un groupe alkyle dans lequel un atome de carbone primaire est fixé à l'atome de silicium, contenant jusqu'à 3 atomes de carbone, R₁ et R₄ étant identiques;
(c) un composé d'organoaluminium;
ledit système étant caractérisé par une efficacité du catalyseur de plus de 30 kg de produit polymère par gramme de catalyseur en 1 heure, tandis que le rapport molaire Si/Ti tel qu'il dérive du Si dans le composé (b) au Ti du composé (a) se situe dans le domaine de 4 à 200.

8. Système selon la revendication 7, dans lequel le système est caractérisé en outre par un produit polymère dans lequel la teneur en produits solubles dans du xylène, mesurée par dissolution du polymère dans du xylène chaud par refroidissement de la solution à 0°C et par précipitation de la forme isotactique hors de la solution, la teneur en produits solubles dans le xylène représentant le pourcentage en poids du polymère soluble dans du xylène froid, est réglée pour représenter au moins 3,00% en poids du produit polymère, tandis que le rapport molaire Si/Ti se situe dans le domaine de 4 à 200.

9. Système selon la revendication 7, dans lequel R₂ et R₃ sont choisis parmi le groupe constitué par un groupe méthyle, un groupe éthyle, un groupe propyle et un groupe butyle.

10. Système selon la revendication 7, dans lequel le catalyseur est soumis à une prépolymérisation.

11. Système selon la revendication 7, dans lequel le composé d'organoaluminium est choisi parmi le groupe constitué par un alkylaluminium, un dihalogénure d'alkylaluminium, un trialcoxyaluminium, un halogénure de dialkylaluminium et un triisobutylaluminium.

12. Système selon la revendication 7, dans lequel le donneur d'électrons est le di-n-propyldiméthoxysilane.

13. Système selon la revendication 10, dans lequel le composé d'organoaluminium est le triéthylaluminium.

14. Procédé pour la polymérisation d'oléfines, comprenant le fait de:
(a) sélectionner un composant de catalyseur de Ziegler-Natta comprenant un composant de catalyseur solide préparé par: (i) mise en suspension d'un dialcoxymagnésium dans un hydrocarbure aromatique qui est liquide à la température normale, (ii) mise en contact du dialcoxymagnésium avec un halogénure de titane et (iii) mise en contact ultérieure de la composition résultante une seconde fois avec l'halogénure de titane, et mise en contact du dialcoxymagnésium en contact avec un diester d'un acide dicarboxylique aromatique à un certain moment au cours du traitement avec l'halogénure de titane dans (ii);
(b) mettre le composant de catalyseur en contact avec un composé d'organoaluminium pour activer le catalyseur;
(c) mettre ledit catalyseur en contact avec un donneur d'électrons externe, soit simultanément avec l'étape (b), soit après cette dernière, ledit donneur d'électrons répondant à la formule: 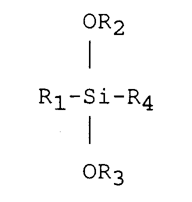 dans laquelle R₁ représente un groupe alkyle dans lequel un atome de carbone primaire est fixé à l'atome de silicium, contenant jusqu'à 3 atomes de carbone; R₂ et R₃ représentent chacun, indépendamment l'un de l'autre, un groupe alkyle ou un groupe aryle; et R₄ représente un groupe alkyle dans lequel un atome de carbone primaire est fixé à l'atome de silicium, contenant jusqu'à 3 atomes de carbone, R₁ et R₄ étant identiques;
(d) soumettre ledit catalyseur à une prépolymérisation par mise en contact d'une petite quantité du monomère avec ledit catalyseur; et
(e) introduire ledit catalyseur dans une zone réactionnelie de polymérisation contenant ledit composé d'organoaluminium, ledit donneur d'électrons et ledit monomère.

15. Procédé selon la revendication 14, dans lequel ledit composé d'organoaluminium est le triéthylaluminium.
